**Europäisches Patentamt**

**European Patent Office**

**Office Européen des brevets**

(19)

(11) Veröffentlichungsnummer : **0 262 528 B1**

(12)

# EUROPÄISCHE PATENTSCHRIFT

(45) Veröffentlichungstag der Patentschrift :
02.01.91 Patentblatt 91/01

(51) Int. Cl.$^5$ : **C08G 65/46**

(21) Anmeldenummer : 87113691.7

(22) Anmeldetag : 18.09.87

(54) Verfahren zur Entfernung des Katalysators aus Polyphenylenetherlösungen.

(30) Priorität : 24.09.86 DE 3632528

(43) Veröffentlichungstag der Anmeldung :
06.04.88 Patentblatt 88/14

(45) Bekanntmachung des Hinweises auf die
Patenterteilung :
02.01.91 Patentblatt 91/01

(84) Benannte Vertragsstaaten :
BE DE FR GB NL

(56) Entgegenhaltungen :
EP-A- 0 076 993
EP-A- 0 148 800
US-A- 4 088 634

(73) Patentinhaber : BASF Aktiengesellschaft
Carl-Bosch-Strasse 38
D-6700 Ludwigshafen (DE)

(72) Erfinder : Brandt, Hermann, Dr.
Keltenstrasse 30
D-6707 Schifferstadt (DE)
Erfinder : Mitulla, Konrad, Dr.
Schwalbenweg 31
D-6700 Ludwigshafen (DE)
Erfinder : Dreher, Hermann, Dr.
Im Waldwinkel 5
D-6104 Seeheim-Jugenheim 1 (DE)
Erfinder : Leber, Ludger, Dr.
Maierstrasse 4
D-6701 Dannstadt-Schauernheim (DE)
Erfinder : Hambrecht, Juergen, Dr.
Am Klosterwald 31
D-4400 Muenster-Hiltrup (DE)

**Beschreibung**

Die Erfindung betrifft ein verbessertes Verfahren zur Entfernung der Kupferkomponente des Katalysators, der bei der Bildung eines Polyphenylenethers durch oxidative Kupplungsreaktionen eines Phenols in Form eines Systems aus einer Kupferverbindung und einem Amin zugegen ist.

Die zur Herstellung der Polyphenylenether am häufigsten angewendeten Verfahren umfassen die Selbstkondensation einwertiger Phenole durch Einwirkung von Sauerstoff in Gegenwart von Katalysatoren. Als Katalysatoren werden bevorzugt Cu-Amin-Komplexe eingesetzt. Als Lösungsmittel werden vorzugsweise aromatische Kohlenwasserstoffe verwendet. Diese Verfahren sind allgemein bekannt und vielfach beschrieben, beispielsweise in den US-Patentschriften 3 306 874, 3 306 875, 3 639 656, 3 642 699 und 3 661 848.

Die Reaktion wird gewöhnlich durch Entfernen des Katalysators aus der Reaktionsmischung beendet. Dies kann gemäß der US-Patentschrift 3 630 995 mit Hilfe von wäßrigen Lösungen anorganischer Säuren oder Essigsäure geschehen. Dieses Verfahren wirkt jedoch häufig nur unvollständig, so daß durch zurückbleibende Katalysatorreste Qualitätsminderungen (z.B. Molekulargewichtsänderungen) möglich sind.

Es wurde daher vorgeschlagen, die Reaktionsmischung mit wäßrigen Lösungen von Komplexierungsmitteln wie Polyaminocarbonsäuren, Nitrilotriessigsäure oder Ethylendiamintetraessigsäure oder deren Na-salzen (DE-OS 23 64 319, DE-OS 26 16 746) zu extrahieren. Diese Verfahren führen zwar im allgemeinen zu einer guten Überführung der Kupferkomponente des Katalysators in die wäßrige Phase, jedoch bereitet die nach der Extraktion notwendige Phasentrennung häufig Schwierigkeiten, insbesondere bei hochkonzentrierten viskosen Polyphenylenetherlösungen. Vermutlich führt die geringe Grenzflächenspannung zwischen der organischen Polyphenylenetherlösung und der wäßrigen Lösung dazu, daß die beiden Phasen sich nur langsam voneinander trennen. Man muß daher unökonomisch lange Wartezeiten in Kauf nehmen oder - bei kontinuierlichen Verfahren - große und daher teure Apparaturen verwenden, wenn man regelmäßig eine vollständige Phasentrennung erzielen will. Zudem enthält die organische Phase einen hohen Restgehalt an Amin, welches bei der Aufarbeitung durch Entgasung zu einem erhöhten Amingehalt im Produkt und somit zu Geruchsproblemen führt.

Aufgabe der Erfindung ist es daher, ein Verfahren bereitzustellen, in dem die Kupferkomponente des Katalysatorsystems unter Vermeidung der genannten Nachteile schnell und vollständig aus der Reaktionsmischung entfernt wird. Demgemäß wurde ein Verfahren zur Abtrennung von Restmengen der Kupferkomponente aus Reaktionsgemischen, die bei der oxidativen Kupplung von Phenolen zu Polyphenylenethern anfallen, mit Hilfe von Katalysatorsystemen aus Kupferverbindungen und Aminen in organischer Lösung und anschließender Extraktion der Hauptmenge der Kupferkomponente mit mindestens einer wäßrigen Säure und einem Kupferkomplexbildner gefunden, das dadurch gekennzeichnet ist, daß man in einem 1. Verfahrensschritt die Polyphenylenetherlösung zunächst mit Säure und in einem 2. Verfahrensschritt das bereits weitgehend von der Kupferkomponente befreite Reaktionsgemisch mit einem Kupferkomplexbildner versetzt, welcher mit dem Kupfer wasserlösliche Komplexe bildet und daß man die so gebildeten Kupferkomplexe mit Wasser extrahiert. Außerdem wurde gefunden, daß mit einem Ammonium- oder Alkalimetallsalz der Ethylendiamintetraessigsäure als komplexbildendem Mittel besonders gute Erfolge erzielt werden.

Die im erfindungsgemäßen Verfahren verwendeten Komplexierungsmittel sind an sich bekannt, z.B. aus der US-PS 4 088 634, der DE-OS 2 460 323 oder der DE-OS 2 460 325. Verwendet werden können Polyamine der Formel $H_2N(C_2H_4NH)_{1-10}H$, Verbindungen aus der Gruppe der Bisguanide, polyfunktionelle carbonsäurehaltige Verbindungen wie Natriumkaliumtartrat, Nitrilotriessigsäure, Zitronensäure, Aminopolycarbonsäuren, Aminocarbonsäuren wie Glycin, Polycarbonsäuren und ihre Ammonium-, Alkalimetall-, Erdalkalimetall- oder gemischten Alkalimetall-Erdalkalimetall-Salze, insbesondere Ammonium- oder Alkalimetallsalze der Ethylendiamintetraessigsäure.

Die erfindungsgemäße Abtrennung der Kupferkomponente des Katalysators aus der Polyphenylenetherlösung kann diskontinuierlich oder kontinuierlich mit bekannten Extraktionsverfahren, wie in einer Gegenstromextraktionskolonne oder in Mischaggregat-Abscheider-Kombinationen, wie in DE-OS 2 460 325 oder DE-OS 3 324 338 beschrieben, durchgeführt werden.

In einer bevorzugten Ausführungsform des erfindungsgemäßen Verfahrens kann der Kupferkomplexbildner gemeinsam mit Wasser mit dem Reaktionsgemisch in üblichen Mischaggregaten wie Rührbehältern vereinigt und innig vermischt werden. Die anschließende Trennung der Phasen in eine amin- und kupferhaltige wäßrige Phase und eine organische Polymerlösung kann in bekannten Abscheidern, wie Absetzbehältern, Zentrifugen, Hydrozyklonen oder Schwerkraftabscheidern erfolgen.

Die Menge des für die Extraktion der Katalysatorkomponenten zugesetzten Wassers ist unkritisch und kann zwischen 70 und 98, insbesondere 85 und 95 Gew-%, bezogen auf die Summe aus Wasser und dem eingesetzten Komplexierungsmittel betragen. Das Volumenverhältnis der organischen Phase zu der wäßrigen Phase kann in weiten Bereichen zwischen 1 :0,2 bis 1 :1, insbesondere 1 :0,35 bis 1 :0,6 eingestellt werden.

Die Kontaktzeiten der Phasen können zwischen 2 und 40 min, bevorzugt zwischen 10 und 35 min betragen. Die Temperaturen betragen im allgemeinen 20 bis 80°C, vorzugsweise 60 bis 75°C, es können jedoch auch höhere Temperaturen angewendet werden, sofern oberhalb des Siededrucks des Wassers und der Lösungsmittel gearbeitet wird. Die Extraktion und die anschließende Phasentrennung werden im allgemeinen bei Atmosphärendruck oder bei geringem Überdruck durchgeführt.

Vor der Extraktion mit der wäßrigen Lösung des Komplexiermittels wird die organische Polyphenylenetherlösung weitgehend von der Kupferkomponente des Katalysatorsystems befreit, indem man sie mit mindestens einer wäßrigen Säure nach bekannten Verfahren, z.B. wie oben für die Komplexierungsmittel beschrieben, extrahiert. Dabei kann die Säure als wäßrige Lösung der Polyphenylenetherlösung zugesetzt werden, oder man leitet, wie es z.B. im Falle der schwefligen Säure auch möglich ist, den gasförmigen Säurebildner in die organische Polyphenylenetherlösung und setzt Wasser hinzu. Bei dieser Extraktion werden üblicherweise mehr als 80 Gew.% der eingesetzten Kupferionen entfernt.

Als Säuren kommen Mineralsäuren wie Salzsäure, Salpetersäure, salpetrige Säure, Phosphorsäure, phosphorige Säure, Schwefelsäure, schweflige Säure oder Carbonsäuren wie Ameisensäure, Chloressigsäure, Propionsäure, Buttersäure, Oxalsäure, Malonsäure, Bernsteinsäure oder Essigsäure in Betracht. Bevorzugt werden Carbonsäuren, insbesondere Essigsäure. Gute Erfolge werden mit schwefliger Säure, die bevorzugt in Form von $SO_2$-Gas und Wasser zugesetzt wird, erzielt.

Die wäßrige Lösung der Säure kann einen Gesamtsäuregehalt zwischen 1 und 80, bevorzugt 2 bis 40, insbesondere 5 bis 25 Gew.% haben. Es versteht sich von selbst, daß es günstig ist, die Säure mindestens molar äquivalent zum Amin einzusetzen. Das Phasenvolumenverhältnis, die Temperatur und der Druck können in den Bereichen, wie sie oben für das Extraktionsverfahren mit komplexbildendem Mittel beschrieben wurden, eingestellt werden.

Es ist wesentlich für das erfindungsgemäße Verfahren, daß die Polyphenylenetherlösung zunächst mit Säure und anschließend mit Komplex bildnern extrahiert wird, daß das Verfahren also in zwei aufeinanderfolgenden Schritten ausgeführt wird.

Bei dem für die Herstellung des Polyphenylenethers verwendeten Katalysatorsystem handelt es sich üblicherweise um eine Kombination aus einem Amin, z.B. n-Dibutylamin, Diethylamin, N,N'-Di-tert-butylethylendiamin, Tri -n-butylamin, Morpholin, Picolin, Chinolin, Pyridinbasen, Triisopropylamin, Dimethylisopropanolamin, Triethanolamin, Triisopropanolamin oder Diisopropanolamin mit einem Kupfersalz wie Kupfer-I-bromid, Kupfer-I-chlorid, Kupfer-I-jodid, Kupfer-II-acetat, Kupfer-II-chlorid, Kupfer-II-propionat oder Kupfer-II-acetylacetonat. Ein bevorzugter Bereich der Menge der eingesetzten Amine liegt bei 2,0 bis 40 mol-% des Monomeren ; die Konzentration der Amine kann aber in der Reaktionsmischung innerhalb weiter Grenzen variieren, zweckmäßig sind jedoch niedere Konzentrationen. Die Konzentration der Kupfersalze wird in der Regel gering gehalten und beträgt vorzugsweise von 0,2 bis 2,5 mol-% des Monomeren.

Bei den Monomeren handelt es sich üblicherweise um einwertige Phenole, die in den beiden ortho-Stellungen und gegebenenfalls den meta-Positionen, nicht aber in der para-Position Alkylsubstituenten aufweisen, wie. z.B. 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole.

Zur Ausführung der Polykondensation wird im allgemeinen ein sauerstoffhaltiges Gas in die 15 bis 50°C warme Lösung des Monomeren in Gegenwart des Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist. Als Lösungsmittel werden Benzol, Toluol oder aliphatische Kohlenwasserstoffe verwendet. Der Gewichtsanteil des Lösungsmittels im Verhältnis zum Monomeren liegt üblicherweise im Bereich von 1 :1 bis 20 :1, d.h. maximal bis zu einem 20fachen Überschuß des Lösungsmittels, bezogen auf das Monomere. Die Polykondensation ist in kurzer Zeit, im allgemeinen nach 3 Stunden, beendet.

Die in einem solchen Verfahren hergestellten Polyphenylenether weisen im allgemeinen Molekulargewichte von 10 000 bis 90 000, bestimmt nach der in "Macromolecular Synthesis" 1 (1978), Seite 83 angegebenen Methode, auf.

Wenn die Polykondensation die gewünschte Ausbeute und das Polymere das gewünschte Molekulargewicht erreicht haben, enthält die Reaktionslösung üblicherweise 1 bis 30 Gew.% Polyphenylenether, 0,005 bis 1,5 Gew.% Metallionen und etwa 1,0 bis 6,0 Gew.% Amin. Der Lösung können gegebenen falls geringe Mengen anderer Materialien, z.B. reduzierende Substanzen wie Natriumsulfit, Natriumdisulfit, Natriumdithionit, Eisen-II-sulfat, Hydrazin, Hydroxylamin oder Zinn-II-chlorid und/oder Substanzen wie Chinone, ein- oder zweiwertige Phenole oder deren Ether, Aminophenole oder Phenylendiamin in Mengen von 1 bis 100 mol pro mol der Metallkomponente des Katalysators zur Stabilisierung gegen oxidative Verfärbung oder Molekulargewichtsveränderungen zugesetzt werden. Diesen Reaktionslösungen wird die Kupferkomponente des Katalysators mit dem erfindungsgemäßen Verfahren entzogen.

Danach und gegebenenfalls nach Waschen der Polyphenylenetherlösung mit Wasser bzw. ihrer Stabilisierung kann der Polyphenylenether aus der Lösung nach bekannten Verfahren isoliert werden. Die Isolierung des Polyphenylenethers ist für die vorliegende Erfindung nicht kritisch. So kann z.B. der Polyphenylenether durch Ausfällen aus der Reaktionslösung mittels eines Fällungsmittels wie Methanol oder durch Entfernen des Lösungsmittels durch Einblasen von Wasserdampf oder durch Sprühtrocknung gewonnen werden.

Die mit den erfindungsgemäßen Verfahren erzielten Vorteile liegen insbesondere darin, daß in kurzer Zeit sowohl die Kupferkomponente als auch die Aminkomponente praktisch vollständig aus der Polyphenylenetherlösung entfernt werden, wobei die organische und die wäßrige Lösung sich überraschend schnell und störungsfrei voneinander trennen.

Beispiel

500 ml einer Reaktionsmischung, die im wesentlichen Toluol, 15 Gew.% Poly-(2,5-dimethyl-1,4-phenylenether), 0,04 Gew.% Kupferionen und 5 Gew.% Dibutylamin enthält, wurden in einem Rührkessel mit 1 l Inhalt, ausgerüstet mit einem Ankerrührer, mit 200 ml einer 10 gew.%igen wäßrigen Essigsäurelösung versetzt und 18 min mit 3 l/h $SO_2$ unter Rühren bei 500 Upm bei 70°C und Normaldruck begast. Die Mischung wurde zur Phasentrennung in einen Schwerkraftabscheider gegeben. Die organische Phase wurde nach 30 min entnommen, in einem Rührkessel wie oben mit 200 ml einer 10 gew.%igen wäßrigen Lösung des Dinatriumsalzes der Ethylendiamintetraessigsäure vermischt und in einen Schwerkraftabscheider gegeben. Die nach einer Verweilzeit von 30 min entnommene organische Phase enthielt, gemessen mit üblichen Analysenmethoden, 0,5 Gew.-ppm Kupfer und 0,07 Gew.% Amin.

Ansprüche

1. Verfahren zur Abtrennung von Restmengen der Kupferkomponente aus Reaktionsgemischen, die bei der oxidativen Kupplung von Phenolen zu Polyphenylenethern anfallen, mit Hilfe von Katalysatorsystemen aus Kupferverbindungen und Aminen in organischer Lösung und anschließender Extraktion der Hauptmenge der Kupferkomponente mit mindestens einer wäßrigen Säure und einem Kupferkomplexbildner, dadurch gekennzeichnet, daß man in einem 1. Verfahrensschritt die Polyphenylenetherlösung zunächst mit Säure und in einem 2. Verfahrensschritt das bereits weitgehend von der Kupferkomponente befreite Reaktionsgemisch mit einem Kupferkomplexbildner versetzt, welcher mit dem Kupfer wasserlösliche Komplexe bildet und daß man die so gebildeten Kupferkomplexe mit Wasser extrahiert.

2. Verfahren nach Anspruch 1, dadurch gekennzeichnet, daß man als komplexbildendes Mittel ein Ammonium- oder Alkalimetallsalz der Ethylendiamintetraessigsäure verwendet.

Claims

1. A process for the removal of a residual amount of the copper component from a reaction mixture produced on oxidative coupling of phenols to give polyphenylene ether, using a catalyst system comprising a copper compound and an amine in organic solution, and subsequently extracting the majority of the copper component with one or more aqueous acids and a copper-complexing agent, which comprises, in a first step, adding acid to the polyphenylene ether solution and, in a second step, adding a copper-complexing agent to the reaction mixture which has already been substantially freed from the copper component, to form a water-soluble complex with the copper, and extracting the copper complex formed in this way with water.

2. A process as claimed in claim 1, wherein the complexing agent used is an ammonium or alkali metal salt of ethylenediaminetetraacetic acid.

Revendications

1. Procédé pour la séparation de quantités résiduelles du composant de cuivre de mélanges réactionnels, que l'on rencontre lors du couplage oxydant de phénols à des poly(éthers de phénylène), à l'aide de systèmes catalytiques constitués de composés de cuivre et d'amines, en solution organique et extraction subséquente de la quantité principale du composant de cuivre avec au moins un acide aqueux et un agent de complexation du cuivre, caractérisé en ce que, au cours d'une première étape opératoire, on ajoute d'abord de l'acide à la solution de poly(éther de phénylène) et, au cours d'une seconde étape opératoire, on ajoute un agent de complexation du cuivre au mélange de réaction déjà en grande partie débarrassé du composant de cuivre, agent de complexation qui forme des complexes hydrosolubles avec le cuivre et en ce que l'on extrait les complexes du cuivre ainsi formés avec de l'eau.

2. Procédé suivant la revendication 1, caractérisé en ce qu'à titre d'agent de complexation, on utilise un sel d'ammonium ou de métal alcalin de l'acide éthylènediaminetétraacétique.